# EUROPÄISCHE PATENTSCHRIFT

(11) **EP 2 755 101 B1**
(45) Veröffentlichungstag und Bekanntmachung des Hinweises auf die Patenterteilung: **29.07.2020**
(21) Anmeldenummer: 13401125.3
(22) Anmeldetag: 03.12.2013
(51) Int. Cl.: G05D 1/02

(54) **Selbstfahrender Roboter und Verfahren zur Abstandsbestimmung bei einem selbstfahrenden Roboter**
Self-propelled robot and method for distance determination in a self-propelled robot
Robot automoteur et procédé de détermination de distance pour un robot automoteur

(30) Priorität: 10.01.2013 DE 102013100192
(43) Veröffentlichungstag der Anmeldung: 16.07.2014
(73) Patentinhaber: Miele & Cie. KG, 33332 Gütersloh (DE); Universität Bielefeld, 33615 Bielefeld (DE)
(72) Erfinder: Horst, Michael, 33613 Bielefeld (DE); Krzykawski, Martin, 32457 Porta Westfalica (DE); Möller, Ralf, 33615 Bielefeld (DE)

(56) Entgegenhaltungen:
- WO-A1-2007/051972
- DE-A1-102007 053 310
- DE-A1-102008 014 912
- DE-B3-102007 016 802

## Beschreibung

Die Erfindung betrifft einen selbstfahrenden Roboter, insbesondere ein selbstfahrendes Bodenbearbeitungsgerät, der bzw. das eine Kamera zur Aufnahme von Bildern einer Umgebung des Roboters und eine Steuereinrichtung zur Auswertung der Bilder der Kamera aufweist. Die Erfindung betrifft weiterhin ein Verfahren zur Abstandsbestimmung bei einem derartigen selbstfahrenden Roboter.

Selbstfahrende Roboter dienen der automatisierten Verrichtung von nicht ortsgebundenen Tätigkeiten. In Form von selbstfahrenden Bodenbearbeitungsgeräten dienen solche Roboter der automatisierten Bearbeitung, beispielsweise Reinigung, von Flächen, ohne dass sie von einem Benutzer geschoben oder geführt werden müssen. Zu solchen selbstfahrenden Bodenbearbeitungsgeräten zählen für den Innenbereich beispielsweise selbstfahrende Staubsauger, auch Saugroboter genannt. Weiterhin werden für den Innenbereich selbstfahrende Reinigungsgeräte zum Wischen von Bodenbelägen eingesetzt. Für den Außenbereich sind als selbstfahrende Bodenbearbeitungsgeräte Mähroboter zum Rasenmähen bekannt und, für eine landwirtschaftliche Nutzung, selbstständig arbeitende Landwirtschaftsmaschinen, beispielsweise zum Pflügen, Säen oder Ernten von großen Feldern.

Die Druckschrift WO 2007 / 051972 A1 offenbart ein Verfahren zur Bewegungsteuerung einer Robotereinheit, bei der ein Lichtgenerator eine Vielzahl von Lichtpunkten in die Umgebung des Roboters projiziert. Diese Punkte werde über eine auf der Robotereinheit angeordnete Kamera erfasst und über Triangulation dazu eingesetzt, die Entfernung der Lichtpunkte von der Kamera zu bestimmen.

Aus der Druckschrift DE 10 2008 014 912 A1 ist es bekannt bei einem selbsttätig verfahrbaren Bodenstaub-Aufsammelgerät eine Sensoreinrichtung zur Hinderniserkennung vorzusehen. Die offenbarte Sensoreinrichtung umfasst eine Lichtquelle und eine lichtempfindliche Empfängereinheit, wodurch eine Entfernungsmessung über optische Triangulation ermöglicht wird.

Die Druckschrift WO 99 / 46 612 A1 offenbart ein optische Sensorsystem zur Detektion der Position eines Objektes bei dem durch eine Lichtquelle ein oder mehrere Lichtstreifen in horizontaler Richtung in mehrere Raumrichtungen erzeugt wird. Das von Objekten reflektierte Licht wird über ein optisches Abbildungselement und einen photoelektrischen Wandler in elektrische Signale umgewandelt, die über Triangulation zur Entfernungsbestimmung der Objekte eingesetzt werden können.

Die Druckschrift DE 10 2007 053 310 A1 offenbart einen selbstfahrenden Roboter, welcher eine Kamera zur Aufnahme von Bilder seiner Umgebung und eine Steuereinrichtung zur Auswertung der Bilder aufweist. Zudem ist an dem selbstfahrenden Roboter eine Laserdiode angeordnet, welcher einen Laserstrahl in die Umgebung abgibt. Die Steuererichtung ist dazu eingerichtet, in den von der Kamera aufgenommenen Bildern einen projizierten Laserreflex auf einem Gegenstand zu detektieren und anhand der Position des Laserreflexes einen Abstand zwischen Roboter und Gegenstand zu bestimmen.

Aus der Druckschrift DE 10 2007 016 802 B3 ist beispielsweise ein selbstfahrender Roboter bekannt, der eine Kamera aufweist, von der in regelmäßigen Zeitabständen Bilder der Umgebung des Roboters aufgenommen und gespeichert werden. Durch einen Vergleich von aktuellen mit gespeicherten Bildern kann durch ein sogenanntes visuelles Homing-Verfahren eine odometrisch, also über Fahrinformationen der Antriebsräder bestimmte Position des Roboters korrigiert werden. Weiter kann die Kamera zu Navigationszwecken verwendet werden.

Zur Vermeidung von Zusammenstößen mit Hindernissen und/oder zur Unterstützung der Navigation weisen selbstfahrende Roboter häufig Abstandssensoren auf, die einen Abstand zu einem Gegenstand bestimmen, der sich in der Umgebung des Roboters befindet. Derartige Abstandssensoren bestehen entweder aus einer kombinierten Sende- und Empfangseinheit, oder es werden getrennte Einheiten genutzt. Für die Messung werden Signale erzeugt, die an Gegenständen, beispielsweise Hindernissen, reflektiert werden. Es sind dabei verschiedene Funktionsprinzipien mit unterschiedlichen Signalarten bekannt.

Bei Infrarot-Sensoren trifft ein reflektierter Strahl - abhängig vom Hindernisabstand - auf eine bestimmte Position des Empfängers, der ortsaufgelöste Messungen zulässt (Position Sensitive Device, PSD). Aus der Messposition kann über Triangulationsmethoden auf den Abstand geschlossen werden. Das Messergebnis wird üblicherweise als analoge Spannung vom Sensor zurückgegeben.

Weiterhin werden Ultraschall-Sensoren eingesetzt, bei denen eine Laufzeitmessung eines vom Sender abgegebenen, vom Gegenstand reflektierten und vom Empfänger aufgenommenen Signals vorgenommen wird.

Darüber hinaus sind optische Abstandsmessungen bekannt. Hier sind zum einen Verfahren zu nennen, bei denen Laserpulse ausgesendet werden, wobei aus der Laufzeit bis zum Eintreffen eines reflektierten Signals die Entfernung berechnet wird (Light detection and ranging, Lidar). Alternativ kann auch eine Phasenverschiebung eines reflektierten Laserstrahls für die Messung herangezogen werden.

Ein weiteres Verfahren arbeitet ähnlich wie die oben beschriebenen Infrarot-Sensoren. Neben dem Laser als Sender beinhaltet der Sensor eine ortsabhängige Photodiode (PSD). Aus dem Messpunkt auf dem PSD kann über Triangulation die Entfernung zum Hindernis berechnet werden. Laserentfernungsmesser messen üblicherweise in verschiedene Richtungen, was durch eine Rotation der entsprechenden Komponenten bzw. eines Umlenkspiegels ermöglicht wird.

Nachteilig bei den genannten Sensoren ist, dass lediglich ein einzelner Spannungswert als Messergebnis ausgegeben wird. Es ist so keine Aussage über die Qualität bzw. Genauigkeit der Messung möglich. Damit können Fehlmessungen nicht erkannt werden. Außerdem können Störeinflüsse (Reflexionen von externen Lichtquellen oder weitere Ultraschall-Sender in der Umgebung) die Messung unbemerkt beeinflussen. Wegen der gegenseitigen Beeinflussung können Ultraschall-Sensoren nur nacheinander betrieben werden, wodurch die Messfrequenz insbesondere bei einer größeren Anzahl an Sensoren eingeschränkt ist. Laserentfernungsmesser beinhalten bewegliche Bauteile, um Messungen in verschiedenen Richtungen zu ermöglichen. Dies kann zu Problemen führen, z.B. zu Verschleiß.

Ein weiterer Nachteil bei den genannten Abstandssensoren ist, dass zur Abstandsmessung nicht nur die Sensoren selbst benötigt werden, sondern zusätzlich freie Schnittstellen an der Steuereinrichtung des Roboters und ggf. zusätzliche Analog/Digital-Wandler, um die von den Sensoren gelieferten Analogwerte verarbeiten zu können. Zudem sind die gewonnenen Informationen u.U. zeitlich nicht synchron zu den von der Kamera aufgenommenen und zur Positionsbestimmung und/oder Navigation verwendeten Bildern. Wenn die Abstandsinformationen ergänzend zu einer auf den Kamerabildern basierenden Positionsbestimmung und/oder Navigation bzw. Hinderniserkennung ausgewertet wird, kann die fehlende zeitliche Synchronisation zwischen der Abstandsmessung und der Aufnahme des Umgebungsbilds zu Fehlern bei den genannten Prozeduren führen.

Es ist daher eine Aufgabe der vorliegenden Erfindung, einen selbstfahrenden Roboter und ein Verfahren zur Abstandsbestimmung bei einem derartigen Roboter zu schaffen, wobei der zusätzliche Material- und damit Kostenaufwand möglichst gering gehalten sein soll. Weiter soll die Abstandsbestimmung möglichst zeitsynchron mit einer Aufnahme von Umgebungsbildern erfolgen und es soll eine Bewertung der Güte der Abstandsbestimmung möglich sein.

Diese Aufgabe wird gelöst durch einen selbstfahrenden Roboter und ein Verfahren zur Abstandsbestimmung bei einem selbstfahrenden Roboter mit den jeweiligen Merkmalen der unabhängigen Ansprüche.

Bei einem erfindungsgemäßen selbstfahrenden Roboter der eingangs genannten Art ist mindestens eine Laserdiode an dem Roboter angeordnet, die einen Laserstrahl in die Umgebung des Roboters abgibt. Weiter ist die Steuereinrichtung dazu eingerichtet, in einem von der Kamera aufgenommenen Bild der Umgebung ein von dem Laserstrahl auf einen Gegenstand projizierten Laserreflex zu detektieren und anhand der Position des Abbilds des Laserreflexes in dem Bild einen Abstand zwischen dem Roboter und dem Gegenstand zu bestimmen.

Ein erfindungsgemäßes Verfahren zur Abstandsmessung bei einem derartigen selbstfahrenden Roboter umfasst, dass mindestens ein Laserreflex auf einen Gegenstand in der Umgebung des Roboters projiziert wird. Es wird ein Bild der Umgebung des Roboters durch die Kamera aufgenommen und eine Position des Abbilds des mindestens einen Laserreflexes in dem Bild identifiziert. Dann wird der Abstand zwischen dem Roboter und dem Gegenstand anhand der Position des Abbilds des mindestens einen Laserreflexes bestimmt.

Erfindungsgemäß wird also eine ohnehin bei dem Roboter vorhandene Kamera zur Aufnahme der Umgebung des Roboters benutzt, um mithilfe eines projizierten Laserreflexes und einer Bildanalyse eine Abstandsmessung vorzunehmen. Eine derartige Bildanalyse kann durch die ebenfalls ohnehin vorhandene Steuereinrichtung des Roboters durchgeführt werden. So kann eine Abstandsmessung mit minimalem zusätzlichen Aufwand an Hardware durchgeführt werden. Die Bildauswertung erlaubt dabei auch eine Beurteilung der Qualität der Messung. Als zweifelhaft erkannte Ergebnisse können so beispielsweise verworfen werden.

Zudem wird der Abstand auf diese Weise zu genau dem Zeitpunkt bestimmt, zu dem auch das Kamerabild der Umgebung erfasst wird. Wird der ermittelte Abstand dann im Rahmen der Auswertung des Kamerabilds unterstützend bei einer Positionsbestimmung und/oder Navigation und/oder Hinderniserkennung verwendet, ist die zeitliche Übereinstimmung von Abstandsmessung und dem aufgenommenen Umgebungsbild gewährleistet. Insbesondere kann das Ansteuern (d.h Ein- und Ausschalten) des Lasers mittels elektronischen Signalen erfolgen, die von der Kamera selbst erzeugt werden. Dadurch kann auf zusätzliche Steuerungseinrichtungen verzichtet werden.

In einer bevorzugten Ausgestaltung des Verfahrens umfasst der Schritt des Identifizierens einer Position des Abbilds des mindestens einen Laserreflexes eine Punktdetektion und/oder eine Kantenunterdrückung im Rahmen eines Bildverarbeitungsverfahrens. Auf diese Weise kann mit bekannten Algorithmen eine Erkennung des Laserreflexes erfolgen.

In einer weiteren bevorzugten Ausgestaltung des Verfahrens wird der Laserreflex zeitlich moduliert projiziert, wobei die zeitliche Modulation bei der Identifizierung des Abbilds des mindestens einen Laserreflexes berücksichtigt wird. Hierdurch kann der Laserreflex zuverlässig von Störlichtreflexen unterschieden werden.

In einer bevorzugten Ausgestaltung des selbstfahrenden Roboters sind mehrere Laserdioden vorhanden oder es ist eine Laserdiode mit einem nachgeordneten Strahlteiler vorgesehen, um mehrere Laserreflexe zu projizieren. Auf diese Weise können Abstandsmessungen in verschiedenen Richtungen parallel und mithilfe eines Bildanalyseschrittes erfolgen.

Weitere vorteilhafte Ausgestaltungen und Weiterbildungen sind in jeweiligen abhängigen Ansprüchen angegeben.

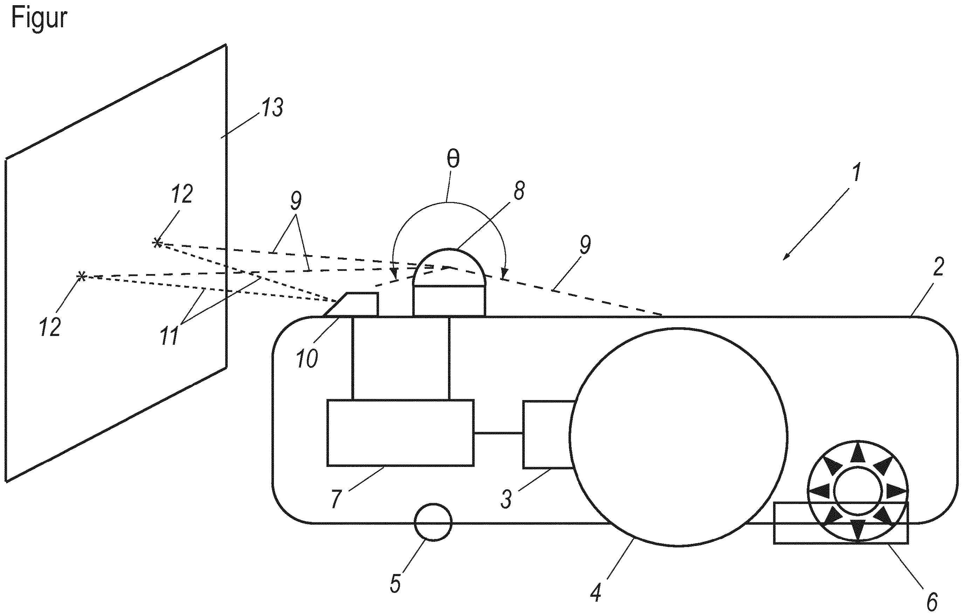

Die Erfindung wird nachfolgend anhand von einer Figur näher erläutert. Die Figur zeigt eine schematische Darstellung eines Bodenbearbeitungsgeräts zur Durchführung des erfindungsgemäßen Verfahrens.

In der Figur ist ein mobiles Bodenbearbeitungsgerät, konkret ein Saugroboter 1, als Beispiel für einen selbstfahrenden Roboter schematisch in einer Seitenansicht dargestellt. Der Saugroboter 1 weist angeordnet an bzw. in einem Gehäuse 2 ein Antriebssystem 3 auf, das auf zwei Antriebsräder 4, eins auf jeder Seite des Saugroboters 1, wirkt. Die Antriebsräder 4 können unabhängig voneinander über hier nicht einzeln dargestellte Antriebsmotoren angetrieben werden. Weiter ist ein Stützrad 5 vorgesehen, das entweder verschwenkbar oder als eine in alle Richtungen drehbare Kugel ausgebildet ist. Bei voneinander unabhängiger Ansteuerung der Drehrichtungen und Drehgeschwindigkeiten der Antriebsräder 4 kann der Saugroboter 1 Bewegungen mit unabhängig voneinander einstellbaren Rotations- und Translationsgeschwindigkeiten auf einer zu reinigenden Fläche ausführen.

Weiterhin ist ein Saugbereich 6 in der Figur angedeutet, in dem nicht dargestellte Saugdüsen angeordnet sind, die beispielsweise in bekannter Weise mit einem Filtersystem, zum Beispiel einem Staubsaugerbeutel, mit einem Gebläsemotor zusammenwirken. Unterstützend ist in dem dargestellten Ausführungsbeispiel im Saugbereich 6 eine rotierende Bürste angeordnet. Der Saugbereich 6 mit der rotierenden Bürste repräsentiert die Reinigungseinrichtungen des Saugroboters 1. Weitere für den Betrieb des Saugroboter 1 vorhandene Elemente, beispielsweise eine wiederaufladbare Batterie zur Stromversorgung, Ladeanschlüsse für die Batterie oder eine Entnahmemöglichkeit für den Staubsaugerbeutel, sind in der Figur aus Gründen der Übersichtlichkeit nicht wiedergegeben.

Der Saugroboter 1 weist eine Steuervorrichtung 7 auf, die mit dem Antriebssystem 3 sowie den Reinigungseinrichtungen zu deren Steuerung verbunden ist. Auf der Oberseite des Saugroboters 1 ist eine Kamera 8 angeordnet, die zur Abbildung der Umgebung des Saugroboters mit einem weiten Gesichtsfeld ausgebildet ist. Ein derartiges weites Gesichtsfeld kann zum Beispiel durch die Verwendung eines sogenannten Fish-Eye-Objektivs erzielt werden. Beispielhaft sind einige von der Kamera 8 aufnehmbare Abbildungsstrahlen 9 dargestellt. Die unteren der dargestellten Abbildungsstrahlen 9 kennzeichnen den Rand des Gesichtsfelds der Kamera 8. Die Kamera 8 weist ein weites Blickfeld mit einem Öffnungswinkel Θ auf, der im dargestellten Beispiel mehr als 180 Grad beträgt. Bevorzugt ist die Kamera 8 eine Panorama-Kamera, die ein 360°-Panoramabild aufzeichnen kann.

Im Betrieb des Saugroboters 1 erfasst die Kamera 8 fortlaufend das Umfeld des Saugroboters 1 und sendet eine Folge aufgenommener Bilder als Signale an die Steuereinrichtung 7.

Weiterhin weist der Saugroboter 1 eine an der Außenseite seines Gehäuses 2 angeordnete Projektionseinheit mit zumindest einer Laserdiode 10 auf. Diese Projektionseinheit sendet zumindest einen, in der Figur beispielhaft zwei Laserstrahlen 11 in die Umgebung des Saugroboters 1 aus. Die Laserstrahlen 11 erzeugen Laserreflexe 12, wenn sie auf einen Gegenstand 13 auftreffen, der hier beispielhaft als ein Wandausschnitt dargestellt ist. Mehrere Laserstrahlen 11 können entweder durch separate Laserdioden 10 erzeugt werden oder durch eine Laserdiode 10, deren primärer Strahl durch Strahlteiler in mehrere Teilstrahlen aufgeteilt wird. Der Laserstrahl oder die Laserstrahlen 11 werden vorzugsweise in eine Richtung ausgestrahlt, die mit der durch die Kamera 8 und die Laserdiode 10 gebildete Achse einen Winkel von über 45°, vorgezogen zumindest annähernd 90°, bildet. Dies bewirkt eine möglichst starke Abhängigkeit der Azimutkoordniate im Kamerabild von der Entfernung des Laserreflexes, was eine besonders genaue Abstandbestimmung ermöglicht.

Bei der Aufnahme von Umgebungsbildern werden die Laserreflexe 12 von der Kamera 8 abgebildet. Bei einer Auswertung des Bilds der Kamera 8 in der Steuereinrichtung 7 werden mithilfe von Bildanalyseverfahren die Laserreflexe 12 im Bild identifiziert. Dabei können in der Bildverarbeitung bzw. Bildanalyse bekannte Methoden wie eine Punktdetektion und/oder eine Kantenunterdrückung eingesetzt werden. Gegebenenfalls kann der Bereich, in dem innerhalb des Bilds nach den Laserreflexen 12 gesucht wird, eingeschränkt werden, da die Richtung der Laserstrahlen 11 grob den Bildausschnitt, in dem die Laserreflexe 12 erwartet werden können, festlegt. Aus der Position erkannter Laserreflexe 12 im Bild der Kamera 8 kann anhand der bekannten Anordnung der Kamera 8 und der Laserdiode 10 oder den Laserdioden 10 am Saugroboter 1 mittels Triangulationsmethoden auf einfache Weise der Abstand zwischen dem Saugroboter 1 und dem Gegenstand 13 ermittelt werden. Die zur Auswertung benötigte relative Lage des Laserstrahls 11 gegenüber der Kamera 8 kann gegebenenfalls auch aus Kalibriermessungen ermittelt werden.

Bei der Auswertung der Bilder kann berücksichtigt werden, wie zuverlässig ein Laserreflex 12 im Bild der Kamera 8 identifiziert werden kann. Ist eine Identifizierung unsicher, kann die entsprechende Messung verworfen werden, um zu verhindern, dass eine Falschmessung, die auf einer Auswertung von Störreflexen basiert, weiterverarbeitet wird. Weiter kann vorgesehen sein, dass der Laserreflex 12 ein von einem einfachen punktförmigen Laserreflex abweichendes Strahlprofil aufweist. Gegebenenfalls kann ein Muster vorgesehen sein, beispielsweise ein Kreuz oder ähnliches, das in den Bildern der Kamera 8 leicht identifiziert werden kann. Schließlich ist es auch möglich, die Laserreflexe 12 zeitlich moduliert zu projizieren und die Modulation bei der Auswertung der Bilder zu berücksichtigen. Beispielsweise können zwei aufeinander folgende Bilder aufgenommen werden, wobei die Laserreflexe 12 bei einem der Bilder vorhanden sind und bei dem anderen nicht. Dazu können beispielsweise die Laserdioden 10 bei der einen Bildaufnahme angeschaltet und bei der anderen abgeschaltet sein. Ein Vergleich der beiden zeitlich unmittelbar nacheinander aufgenommenen Bilder ermöglicht eine einfache und zuverlässige Identifizierung der Laserreflexe 12. Vorzugsweise werden dabei die beiden zeitlich unmittelbar nacheinander aufgenommenen Bilder bei stillstehenden Roboter aufgenommen.

Grundsätzlich ist als Kamera 8 eine Graustufenkamera zur Durchführung des erfindungsgemäßen Verfahrens ausreichend. Wird eine Farbkamera eingesetzt, kann die Farbinformation zusätzlich zur Identifizierung der Laserreflexe 12 eingesetzt werden. Vorzugsweise wird die Belichtung der Kamera 8 während einer Abstandsmessung herabgesetzt; die Kamera wird insbesondere deutlich geringer belichtet, als bei einer Verwendung der Kamera lediglich zu Positionsbestimmungs- und/oder Navigationszwecken, insbesondere wird die Kamera unterbelichtet. Dadurch heben sich die Lichtreflexe deutlicher vom dunkleren Hintergrund ab, so dass sie besser detektiert und Fehldetektionen weiter vermieden werden.
Zusammenfassend ist bei dem dargestellten Saugroboter 1 eine Abstandsmessung zu Gegenständen 13, beispielsweise zu Hindernissen, mit geringem zusätzlichen Kosten- und Materialaufwand möglich, indem die sowieso zu Positionsbestimmungs- und/oder Navigationszwecken vorhandene Kamera 8 durch geeignete Bildanalyseverfahren zur Abstandsmessung eingesetzt wird. Hardwaremäßig ist lediglich die Projektionseinheit mit der einen oder mit mehreren Laserdioden 10 erforderlich.

## Patentansprüche

1. Verfahren zur Abstandsmessung bei einem selbstfahrenden Roboter, der eine Kamera (8) zur Aufnahme von Bildern einer Umgebung des Roboters und eine Steuereinrichtung (7) zur Auswertung der Bilder der Kamera (8) aufweist, **gekennzeichnet durch** die folgenden Schritten:
- Projizieren mindestens eines Laserreflexes (12) auf einen Gegenstand in der Umgebung des Roboters;
- Aufnehmen eines Bildes der Umgebung des Roboters durch die Kamera (8);
- Identifizieren einer Position des Abbilds des mindestens einen Laserreflexes (12) in dem Bild, wobei der Laserreflex (12) zeitlich moduliert projiziert wird und wobei die zeitliche Modulation bei der Identifizierung des Abbilds des mindestens einen Laserreflexes (12) berücksichtigt wird und
- Bestimmen eines Abstands zwischen dem Roboter und dem Gegenstand anhand der Position des Abbilds des mindestens einen Laserreflexes (12).

2. Verfahren nach Anspruch 1, bei dem der Schritt des Identifizierens einer Position des Abbilds des mindestens einen Laserreflexes (12) eine Punktdetektion und/oder eine Kantenunterdrückung im Rahmen eines Bildverarbeitungsverfahrens umfasst.

3. Verfahren nach einem der Ansprüche 1 bis 2, bei dem der Abstand mit trigonometrischen Verfahren bestimmt wird.

4. Verfahren nach einem der Ansprüche 1 bis 3, bei dem das Bild zudem zur Positionsbestimmung und/oder zur Navigation des Roboters verwendet wird.

5. Verfahren nach einem der Ansprüche 1 bis 4, bei dem der Laserreflex 12 ein von einem einfachen punktförmigen Laserreflex abweichendes Strahlprofil aufweist.

6. Verfahren nach Anspruch 5, bei dem das Strahlprofil des Laserreflexes ein Muster aufweist, insbesondere ein Kreuz.

7. Saugroboter mit einer Steuereinrichtung (7), wobei die Steuereinrichtung (7) dazu ausgebildet ist ein Verfahren gemäß Anspruch 1 durchzuführen.

## Claims

1. Method for measuring distance for a self-driving robot, which has a camera (8) for capturing images of the surroundings of the robot, and a control device (7) for evaluating the images from the camera (8), **characterised by** the following steps:
- projecting at least one laser reflex (12) onto an object in the surroundings of the robot;
- capturing an image of the surroundings of the robot by means of the camera (8);
- identifying a position of the depiction of the at least one laser reflex (12) in the image, the laser reflex (12) being projected in a time-modulated manner and the temporal modulation being taken into account when identifying the depiction of the at least one laser reflex (12); and
- determining a distance between the robot and the object on the basis of the position of the depiction of the at least one laser reflex (12).

2. Method according to claim 1, wherein the step of identifying a position of the depiction of the at least one laser reflex (12) comprises point detection and/or edge suppression as part of an image processing method.

3. Method according to either claim 1 or claim 2, wherein the distance is determined using trigonometric methods.

4. Method according to any of claims 1 to 3, wherein the image is also used for determining the position of the robot and/or for navigating the robot.

5. Method according to any of claims 1 to 4, wherein the laser reflex 12 has a beam profile that deviates from a simple punctiform laser reflex.

6. Method according to claim 5, wherein the beam profile of the laser reflex has a pattern, in particular a cross.

7. Robot vacuum comprising a control device (7), wherein the control device (7) is designed to carry out a method according to claim 1.

## Revendications

1. Procédé de mesure de distance pour un robot autonome qui comporte une caméra (8) pour la prise d'images d'un environnement du robot, et un dispositif de commande (7) pour l'évaluation des images de la caméra (8), **caractérisé par** les étapes suivantes :
- projection d'au moins un réflexe laser (12) sur un objet dans l'environnement du robot ;
- prise d'une image de l'environnement du robot par la caméra (8) ;
- identification d'une position du reflet d'au moins un réflexe laser (12) dans l'image, le réflexe laser (12) étant projeté de manière modulée dans le temps, et la modulation temporelle étant prise en compte lors de l'identification du reflet de l'au moins un réflexe laser (12) ; et
- détermination d'une distance entre le robot et l'objet sur la base de la position du reflet de l'au moins un réflexe laser (12).

2. Procédé selon la revendication 1, dans lequel l'étape d'identification d'une position du reflet de l'au moins un réflexe laser (12) comprend une détection de point et/ou une suppression de bord dans le cadre d'un procédé de traitement d'image.

3. Procédé selon l'une des revendications 1 et 2, dans lequel la distance est déterminée à l'aide de procédés trigonométriques.

4. Procédé selon l'une des revendications 1 à 3, dans lequel l'image est également utilisée pour la détermination de la position et/ou pour la navigation du robot.

5. Procédé selon l'une des revendications 1 à 4, dans lequel le réflexe laser (12) présente un profil de faisceau s'écartant d'un simple réflexe laser en forme de point.

6. Procédé selon la revendication 5, dans lequel le profil de faisceau du réflexe laser présente un motif, notamment une croix.

7. Robot aspirateur comportant un dispositif de commande (7), le dispositif de commande (7) étant conçu pour mettre en œuvre un procédé selon la revendication 1.
